# EUROPÄISCHE PATENTANMELDUNG

(11) **EP 1 514 638 A2**
(43) Veröffentlichungstag der Anmeldung: **16.03.2005**
(21) Anmeldenummer: 04001531.5
(22) Anmeldetag: 24.01.2004
(51) Int. Cl.: B23Q 15/18, B25B 11/00

(54) **Verfahren und Anordnung zum Bearbeiten eines in einer Spannvorrichtung eingespannten Werkstückes**

(30) Priorität: 18.08.2003 EP 03018548
(71) Anmelder: Fooke GmbH, D-46325 Borken (DE)
(72) Erfinder: Löttert, Richard, Dipl.-Ing., 46342 Velen (DE); Grage, Gerhard Dipl.-Ing., 46325 Borken (DE)
(74) Vertreter: Habbel, Ludwig (Lutz), Dipl.-Ing.

(57) **Zusammenfassung**

Die Erfindung bezieht sich auf ein Verfahren zum Bearbeiten eines in einer Spannvorrichtung eingespannten Werkstückes, wobei das Werkstück eine "Soll-Position" einnimmt,
und die Oberfläche des Werkstückes durch ein relativ zum Werkstück entlang einem Bahnverlauf bewegliches Werkzeug zur Schaffung einer "Soll-Kontur" des Werkstücks bearbeitet wird,
und das Werkstück auf der dem Werkzeug gegenüberliegenden Seite von einer Messeinrichtung abgetastet wird,
und die Messeinrichtung und das Werkzeug gemeinsam geführt werden, derart, dass die Messeinrichtung stets die dem Werkzeug gegenüberliegende Stelle des Werkstückes abtastet,
und während der Bearbeitung erfolgende Positionsveränderungen des Werkstückes gegenüber der Sollposition - wie durch Druck, Wärmeeinflüsse oder Spannungen verursachte Positionsveränderungen - von der Messeinrichtung erfasst werden,
und wobei das Werkzeug während der Bearbeitung in Abhängigkeit von den Messwerten der Messeinrichtung und abweichend von einem als "Soll-Kurve" bezeichneten, vorgegebenen Bahnverlauf nachgeführt wird, derart, dass die vorgegebene Soll-Kontur des Werkstücks möglichst präzise erstellt wird,
oder wobei der Verlauf der Soll-Kurve in Abhängigkeit von den Messwerten der Messeinrichtung während der Bearbeitung des Werkstücks dahingehend korrigiert wird, dass die korrigierte Soll-Kurve Positionsveränderungen des Werkstückes ausgleicht und die vorgegebene Soll-Kontur des Werkstücks möglichst präzise erstellt wird.

## Beschreibung

Die Erfindung betrifft ein Verfahren und eine Anordnung zum Bearbeiten eines Werkstückes, welches in einer Spannvorrichtung eingespannt ist.

Es ist angestrebt, das Werkzeug anhand einer als "Soll-Kurve" bezeichneten, zuvor programmierten Bahnkurve zu verfahren und auf diese Weise dem Werkstück eine vorgegebene, als "Soll-Kontur" bezeichnete Oberfläche zu verleihen.

Bei der Bearbeitung dünner Werkstücke, beispielsweise bei der Bearbeitung von 2 mm starken Aluminiumblechplatten, kann aus mehreren Gründen das Problem auftauchen, dass sich das Werkstück während der Bearbeitung verformt: Beispielsweise bei einer spanabhebenden Bearbeitung mittels eines Fräskopfes kann der Druck des Fräskopfes dazu führen, dass sich das Werkstück zwischen zwei Einspannstellen verformt. Auch die durch die Bearbeitung im Werkstück entstehende Wärme kann zu einer Verformung des Werkstückes führen. Weiterhin kann es durch die Verletzung der Werkstückoberfläche während der Bearbeitung dazu kommen, dass im Werkstück vorhandene Spannungen die Verformung des Werkstückes bewirken.

Aus dieser nach dem Spannen des Werkstücks und während seiner Bearbeitung auftretenden Werkstückverformung kann resultieren, dass das korrekt im Raum positionierte Werkzeug seine Relativ-Position zum Werkstück nicht mehr in der gewünschten Weise beibehält, so dass entweder zu viel oder zu wenig Material vom Werkstück abgetragen wird und das Werkstück anschließend an der bearbeiteten Stelle nicht die gewünschte Soll-Materialstärke und dementsprechend nicht die gewünschte Sollkontur aufweist.

Der Erfindung liegt die Aufgabe zugrunde, ein Verfahren zum Bearbeiten eines in einer Spannvorrichtung eingespannten Werkstückes anzugeben, welches auch bei während der Bearbeitung auftretenden Positionsveränderungen des Werkstückes die Erzielung der gewünschten Sollkontur des Werkstückes sicherstellt. Weiterhin liegt der Erfindung die Aufgabe zugrunde, eine dazu geeignete Anordnung anzugeben.

Diese Aufgabe wird durch ein Verfahren mit den Verfahrensschritten des Anspruches 1 und durch eine Anordnung mit den Merkmalen des Anspruches 12 gelöst.

Die Erfindung schlägt mit anderen Worten vor, während der Bearbeitung eine Kontrolle des Werkstücks in dem Bereich durchzuführen, wo das Werkstück momentan bearbeitet wird, und das Werkzeug entsprechend nachzuführen, wenn Veränderungen des Werkstücks gegenüber Sollwerten festgestellt werden.

Ausgehend von einem räumlichen Koordinatensystem kann eine Kontrolle durchgeführt werden, wo sich die Werkstück-Rückseite im Raum befindet, so daß z. B. bei Durchbiegungen eines zu bearbeitenden Blechs das die Werkstück-Vorderseite bearbeitende Werkzeug entsprechend weiter nachgeführt wird. Alternativ kann eine Kontrolle des Werkstücks in Form einer Wandstärkenmessung erfolgen, so daß unabhängig von der Position des Werkstücks im Raum einfach aufgrund des bereits erzielten Bearbeitungsfortschritts das Werkzeug gegebenenfalls nachgeführt wird, bis das Werkstück die gewünschte Materialstärke aufweist. Dies ist insbesondere dann möglich, wenn die Bearbeitung des Werkstücks darin besteht, seine Wandstärke in bestimmten, als "Taschen" bezeichneten Bereichen zu reduzieren, wie das z. B. zur Gewichtseinsparung bei Blechtafeln bekannt ist, die zur Herstellung von Flugzeugbauteilen dienen.

Die Erfindung geht davon aus, dass das Werkstück grundsätzlich in seiner korrekten Position eingespannt bleibt und dass die unerwünschten Verformungen insbesondere im Bereich der Bearbeitungsstelle auftreten. Das Werkzeug kann daher grundsätzlich entlang seiner vorgesehenen Sollkurve bewegt werden und wird lediglich davon abweichend nachgeführt, falls Verformungen des Werkstücks festgestellt werden. Dies kann auch dadurch erfolgen, dass der Verlauf der Soll-Kurve in Abhängigkeit von den Messwerten der Messeinrichtung während der Bearbeitung des Werkstücks dahingehend korrigiert wird, dass die korrigierte Soll-Kurve Positionsveränderungen des Werkstückes ausgleicht und erst während der Bearbeitung der für das Werkzeug nächstfolgende Abschnitt der Werkstück-Sollkontur möglichst präzise erstellt wird.

Es wird daher vorgeschlagen, dem Werkzeug gegenüberliegend die Rückseite des Werkstückes abzutasten, so dass einerseits die zum Abtasten vorgesehene Messeinrichtung und andererseits das Werkzeug gemeinsam bewegt werden können und dementsprechend die Messeinrichtung die Rückseite der momentan bearbeiteten Werkstückstelle abtasten kann.

Eine rechnergestützte Steuerung, die einerseits für die Bewegungen von Messeinrichtung und Werkzeug zuständig ist, verarbeitet andererseits auch die Messergebnisse und führt das Werkzeug entsprechend den Positionsveränderungen des Werkstückes nach, so dass stets die vorgesehene Bearbeitungstiefe am Werkstück durch das Werkzeug erfolgt und dementsprechend die gewünschte Sollkontur des Werkstückes geschaffen wird.

Die Erfassung von Positionsveränderungen des Werkstücks kann gemäß einer ersten Ausgestaltung des vorgeschlagenen Verfahrens die Erfassung der absoluten Position, d. h. die Position des Werkstücks bzw. von dessen Rückseite im Raum bedeuten:

Die Abtastung des Werkstückes kann dabei beispielsweise mittels Tastrollen od. dgl. mechanisch erfolgen. Vorteilhaft jedoch wird die Messeinrichtung das Werkstück berührungslos abtasten, da hierdurch mechanische Fehlerquellen ausgeschlossen werden, die Messgenauigkeit entsprechend verbessert wird und insbesondere auch eine gute Zugänglichkeit zu mechanisch vielleicht schlecht erreichbaren Stellen möglich ist.

Insbesondere kann vorteilhaft vorgesehen sein, dass die Messeinrichtung das Werkstück durch Licht, wie beispielsweise mittels eines Laserstrahls, abtastet. Dabei ist vorteilhaft, dass entsprechende, hochgenaue Messeinrichtungen handelsüblich sind. Bei derartigen Laser-Messeinrichtungen kann der Laserstrahl abgelenkt bzw. verschwenkt werden, so dass einerseits auch schlecht erreichbare Werkstückflächen abtastbar sind und andererseits eine schnelle Beweglichkeit der Messeinrichtung möglich ist, ohne größere Materialmassen bewegen zu müssen, wie dies beispielsweise bei einer mechanischen Abtastung nicht ausgeschlossen werden kann.

Wenn das zu bearbeitende Werkstück auf seiner als "Rückseite", also dem Werkzeug gegenüberliegenden Seite, von mehreren Spannköpfen gehalten wird, so kann vorteilhaft vorgesehen sein, jeweils den Spannkopf zu lösen und vom Werkstück zu entfernen, welcher der Bearbeitungsstelle am nächsten ist. Auf diese Weise ist sichergestellt, dass die Rückseite der Bearbeitungsstelle frei zugänglich ist und abgetastet werden kann, so dass die Verformungen, also die Positionsänderungen des Werkstücks zuverlässig erfasst werden können. Dies ist insofern überraschend, als üblicherweise insbesondere der momentan bearbeitete Bereich des Werkstückes besonders zuverlässig festgelegt werden sollte, um Verformungen und ähnliche Positionsveränderungen des Werkstücks zuverlässig auszuschließen.

Die Erfindung geht jedoch davon aus, dass die umgebenden Spannköpfe das Werkstück ausreichend sicher festlegen, um eine zuverlässige Bearbeitung zu ermöglichen und dass Verformungen, die im Bereich der Bearbeitungsstelle am Werkstück auftreten, durch die Messeinrichtung zuverlässig erfasst werden können. Durch diese Abtastung des Werkstückes wiederum wird in besonders zuverlässiger und hochgenauer Weise die Führung des Werkzeuges ermöglicht.

Wenn das Werkzeug die zunächst bearbeitete Stelle bearbeitet hat und entlang dem Werkstück weiter verfährt, wird erfindungsgemäß auch die Abtasteinrichtung gemeinsam mit dem Werkzeug bewegt, so dass an der zuvor bearbeiteten Stelle nun das Werkstück wieder festgelegt werden kann. Der zunächst gelöste und entfernte Spannkopf wird hierzu wieder an das Werkzeug angelegt und legt dieses fest.

Die Erfassung von Positionsveränderungen des Werkstücks kann gemäß einer zweiten Ausgestaltung des vorgeschlagenen Verfahrens unabhängig von der absoluten Position des Werkstücks innerhalb eines räumlichen Koordinatensystems die Erfassung der relativen Position des Werkstücks bedeuten, d. h. die Position des Werkstücks im Verhältnis zum Werkzeug:

Die Messeinrichtung bewegt sich gemeinsam mit dem Werkstück, so dass sie Verformungen des Werkstückes mitmacht. Die absolute Position der Messeinrichtung oder auch des Werkstückes im Raum ist dabei von lediglich untergeordneter Relevanz, vielmehr ist entscheidend, dass die Messeinrichtung die Wandstärke des Werkstückes in dem Bereich erfasst, wo das Werkzeug das Werkstück bearbeitet, so dass anhand der ermittelten Materialstärke Korrekturen des Werkzeugs möglich sind, so dass dieses abweichend von seiner Soll-Kurve nachgeführt wird, um die gewünschte Soll-Materialstärke des Werkstücks zu erzielen. Weicht das Werkstück daher unter dem Druck des Werzeugs aus, so ändert sich die Position seiner Rückseite im Verhältnis zum Werkzeug nicht in dem Maß, wie es durch die Bewegung des Werkzeugs - nämlich als Eindringtiefe in das Werkstück - vorgesehen ist, so dass das Werkzeug vorschlagsgemäß nachgeführt wird, bis die Position der Werkstück-Rückseite im Verhältnis zum Werkzeug dem Sollwert entspricht, das Werkstück also die gewünschte Wandstärke aufweist.

Diese zweite Ausgestaltung des vorschlagsgemäßen Verfahrens hat den Vorteil, dass an die mechanische Präzision der zu schaffenden Vorrichtung erheblich geringere Anforderungen zu stellen sind: beispielsweise durch Verbiegungen eines Werkzeug-Arms, Spiel in den Gelenken eines Werkzeug-Arms, oder durch ähnliche mechanische Einflüsse am Werkzeug können sich Ungenauigkeiten ergeben, so dass die absolute Position des Werkzeuges im Raum von einer Soll-Position abweichen kann, und insbesondere die Position des Bearbeitungskopfes des Werkzeuges kann von einer Soll-Position abweichen, so dass dieser Bearbeitungskopf nicht die vorgesehene Soll-Kurve beschreibt und dementsprechend nicht die Soll-Kontur des Werkstücks erzeugt.

Bei dieser zweiten Ausgestaltung der vorschlagsgemäßen Verfahrensweise können derartige Ungeauigkeiten unberücksichtigt bleiben. Es wird vielmehr lediglich das Ergebnis ermittelt, welches mit Hilfe des Werkzeugs geschaffen wird, nämlich die Materialstärke des bearbeiteten Werkstücks. Unabhängig von eventuellen Bewegungen des Werkstücks im Raum wird diese Materialstärke mehr oder weniger kontinuierlich ermittelt, so dass dementsprechend das Werkzeug nachgeführt werden kann und als Ergebnis die gewünschte Materialstärke und damit die gewünschte Soll-Kontur des Werkstücks erzielt wird.

Zu diesem Zweck arbeitet die Messeinrichtung gemäß dieser Verfahrensvariante materialdurchdringend, d. h., es bedarf keiner Berechnung, wo sich die Vorder- und Rückseiten des Werkstückes im Raum befinden und wie dementsprechend das Werkzeug nachzuführen sei, sondern es wird unmittelbar ein nicht berechnetes, sondern zuverlässig gemessenes Ergebnis über die Materialstärke des Werkstückes erhalten.

Zusätzlich zu diesen Vorteilen kommt als weiterer Vorteil hinzu, dass bei dieser Verfahrensvariante die Messeinrichtung dem Werkstück angelegt wird, wodurch eine Dämpfung von Vibrationen erzielt wird, die ggf. durch die mechanische Bearbeitung des Werkstückes angeregt werden könnten und zu unerwünschten Absätzen bzw. "Rattanmarken" in der Werkstückoberfläche führen könnten.

Das vorgeschlagene Verfahren eignet sich insbesondere zur Bearbeitung dünner, flächiger Werkstücke, wie beispielsweise metallischer Bleche, wobei nicht nur die vorerwähnte mechanische Bearbeitung und insbesondere spanabhebende Bearbeitung mittels eines Fräsers vorgesehen sein kann, sondern auch andere Bearbeitungen, die zu einer unerwünschten Verformung des Werkstückes führen können, beispielsweise durch Druckoder Wärmeeinwirkung.

Die erfindungsgemäß vorgeschlagene Anordnung sieht einerseits die Spannvorrichtung vor, welche das Werkstück fixiert. Auf der als "Vorderseite" bezeichneten Bearbeitungsseite ist das Werkzeug vorgesehen, welches die Oberfläche des Werkstückes bearbeitet, also die Vorderseite des Werkstückes. Weiterhin ist auf der Rückseite die Messeinrichtung vorgesehen, welche die Rückseite des Werkstückes genau an der Stelle abtastet, die der momentan bearbeiteten Stelle auf der Vorderseite des Werkstückes gegenüberliegt, oder in einem geringen Abstand von dieser momentan bearbeiteten Stelle. Zu diesem Zweck ist die Messeinrichtung - ähnlich wie das Werkzeug - relativ zum Werkstück beweglich. Insbesondere bei großflächigen Werkstücken ist dabei vorzugsweise vorgesehen, Messeinrichtung und Werkzeug zu bewegen und das Werkstück ortsfest zu belassen.

Schließlich ist eine Steuerung vorgesehen, welche die Bewegungen der Messeinrichtung und des Werkzeuges steuert, und welche zudem die Messwerte der Messeinrichtung auswertet und dementsprechend das Werkzeug nachführt, von einer idealisierten oder Soll-Bahnkurve abweichend, so dass das Werkzeug nicht auf dieser Soll-Kurve geführt wird, sondern auf einer davon abweichenden Bahnkurve, welche die tatsächlichen, an der jeweiligen Bearbeitungsstelle auftretenden Verformungen und Positionsveränderungen des Werkstückes berücksichtigt. Auf diese Weise wird die gewünschte Werkstück-Sollkontur bei der Bearbeitung erzielt.

Insbesondere wenn die Messeinrichtung als dem Werkstück anliegende Abtasteinrichtung ausgestaltet ist, kann sie einen Anlageteller aufweisen, der vorzugsweise einen vergleichsweise geringen Durchmesser aufweist, beispielsweise zwischen 70 und 150 mm im Durchmesser bei einem kreisrunden Anlageteller. Durch diese geringen Abmessungen ist eine zuverlässige Anlage an planen und auch an großflächig gebogenen Werkstücken sichergestellt und andererseits ist eine derartige Ausgestaltung des Anlagetellers ausreichend groß, um die Anordnung mehrerer Sensoren zu ermöglichen.

So kann vorzugsweise ein Sensor als Wandstärkensensor ausgebildet sein, um die Materialstärke des Werkstücks zu bestimmen. Beispielsweise kann hierfür ein Ultraschall-Sensor Verwendung finden. Weiterhin kann wenigstens einer, vorzugsweise jedoch drei oder mehr Sensoren zur Bestimmung der Ausrichtung der Werkstückoberfläche in dem Anlageteller vorgesehen sein. Die Bestimmung der Ausrichtung der Werkstückoberfläche kann genutzt werden, um einen Bearbeitungskopf des Werkzeuges bzw. das gesamte Werkzeug korrekt zur Oberfläche des Werkstücks auszurichten, beispielsweise vertikal auf diese Oberfläche auszurichten.

Wenn beispielsweise ein zylindrischer sogenannter Fingerfräser als Bearbeitungskopf des Werkzeuges benutzt wird, ergibt die Zylinderform eine umlaufende Kante am äußeren Ende des Fräskopfes als sogenannte Strinkante. Für die Steuerung des Werkzeugvorschubs in das Werkstück hinein wird häufig die Mitte der Fräskopf-Stirnfläche berücksichtigt. Bei einer Schrägstellung zwischen Werkstück und Werkzeug kann die Strinkante des Fräskopfes unerwünschte Markierungen im Werkstück erzeugen, da der Fräskopf möglicherweise mit seiner Strinkante zu tief in das schräg zum Werkzeug stehende Werkstück eindringt.

Durch Ermittlung der Ausrichtung der Werkstückoberfläche kann der Fräskopf entsprechend korrigiert verfahren werden, so dass bewußt nicht davon ausgegangen wird, dass der Mittelpunkt seiner Stirnfläche den Materialabtrag am Werkstück bestimmt, sondern vielmehr kann in der Steuerung des Werkzeuges berücksichtigt werden, dass der Fräskopf mit seiner Kante demgegenüber unerwünscht weiter in das Werkstück eindringt.

Alternativ - und bevorzugt - kann bei der Erfassung der Orientierung des Werkstückes das Werkzeug so verschwenkt werden, dass sein Bearbeitungskopf in einer vorbestimmten Ausrichtung zur Werkstückoberfläche steht, beispielsweise senkrecht auf die Werkstückoberfläche steht, so dass bei dem beispielhaft erwähnten Fingerfräser dessen Stirnkante nicht unerwünscht weit, nämlich nicht weiter als der Mittelpunkt der Stirnfläche des Fräskopfes, in das Werkstück eindringt.

Zur Bestimmung dieser Ausrichtung der Werkstückoberfläche weisen die vorzugsweise drei vorgesehenen Sensoren, die vorzugsweise etwa in Form eines Dreiecks zueinander ausgerichtet sind, einen Abstand von jeweils etwa 30 bis 50 mm voneinander auf. Durch diese Abstandsmaße ist sichergestellt, dass minimal unterschiedliche Abstände der Werkstückoberfläche von den Sensoren registriert werden und dementsprechend eine Schrägstellung der Werkstückoberfläche gegenüber dem Anlageteller der Messeinrichtung registriert wird. Zu diesem Zweck können die Sensoren beispielsweise als Wirbelstrom-Sensoren ausgestaltet sein, die sehr präzise derartige unterschiedliche Entfernungen zwischen Anlageteller und Werkstückoberfläche registrieren.

Insbesondere wenn große Blechtafeln bearbeitet werden müssen, wie beispielsweise für Flugzeug-Rumpfabschnitte, sind große Krümmungsradien der Blechtafeln vorgesehen. Für die Ermittlung der Ausrichtung des Blechs im Bereich der momentan bearbeiteten Stelle im Raum ist es daher in der Praxis ausreichend, den Anlageteller bis an eine Einspannvorrichtung heranzufahren und das Bearbeitungswerkzeug anschließend weiterzuführen, ohne das Spannelement zu lösen und vom Werkstück zu entfernen und an seiner Stelle den Anlageteller mit dem Werkzeug gemeinsam entlang der Bearbeitungsstelle zu verfahren. Bei der vorgeschlagenen Verfahrensvariante, bei welcher die Messeinrichtung dem Werkstück anliegt, kann daher darauf verzichtet werden, die Spannelemente an der Bearbeitungsstelle zu lösen und später erneut anzulegen.

Vielmehr kann insbesondere bei großflächig gewölbten Werkstücken der weitere Verlauf des Werkstückes aufgrund der bislang ermittelten Werkstück-Kontur im Bereich der Einspannstellen interpoliert werden. Diese Interpolation beeinträchtigt die Präzision nicht nachteilig, denn dadurch, dass das Werkstück während der Bearbeitung im Bereich der Einspannstelle eingespannt verbleibt, kann zwar einerseits die Messvorrichtung nicht dem Werkzeug gegenüberliegend das Werkstück abtasten, jedoch sind andererseits nachteilige Einflüsse wie beispielsweise Vibrationen nicht zu befürchten, die die Bearbeitungsqualität beeinträchtigen könnten, da das Werkstück ja während seiner Bearbeitung im Bereich der Einspannstelle eingespannt verbleibt und somit zuverlässig festgelegt ist.

Die Spannvorrichtung kann in an sich bekannter Weise aus einem Spanntisch bestehen, auf welchem eine Vielzahl von einzelnen Spannern angeordnet ist. Beispielsweise kann der Spanntisch horizontal ausgerichtet sein und eine Vielzahl etwa vertikal verlaufender Spanner aufweisen, die an ihrer Oberseite die entsprechenden Spannköpfe tragen, welche das Werkstück festlegen.

Vorteilhaft jedoch wird eine Spannvorrichtung verwendet, die eine Spannkette aufweist, welche aus einer Mehrzahl einzelner Spannglieder besteht und die zwischen zwei Konsolen gehalten ist. Ausgehend von dem vorerwähnten horizontalen Spanntisch können daher zwei aufrechte Konsolen vorgesehen sein, zwischen denen die Spannkette gehalten ist, wobei diese Spannkette im Abstand oberhalb vom Spanntisch verläuft.

Die einzelnen Spannglieder weisen ihrerseits wenigstens einen, vorzugsweise jedoch jeweils mehrere Spannköpfe auf, um das Werkstück zuverlässig festzulegen. Da die Spannkette oberhalb des Spanntisches angeordnet ist, wird unterhalb der Spannkette ein Freiraum geschaffen, der die problemlose Beweglichkeit der Messeinrichtung sicherstellt, so dass im Vergleich zu der vorerwähnten Spanneinrichtung, bei der sich eine Vielzahl von Spannern unmittelbar vom Spanntisch aus erstrecken, eine erheblich verbesserte Beweglichkeit der Messeinrichtung ermöglicht wird, so dass die zu bearbeitenden Stellen des Werkstückes auf der Rückseite von der Messeinrichtung abgetastet werden können.

Die einzelnen Spannglieder können dabei durch mehrere Hydraulik-Stellzylinder winkelbeweglich zueinander verstellt werden, so dass eine optimale Anpassung an die Kontur auch gekrümmter Werkstücke möglich ist. Eine besonders große Freiheit in der Anordnung der einzelnen Spannglieder zueinander kann dadurch erreicht werden, dass zwei Spannglieder jeweils über eine Kugel-Pfannen-Lagerung aneinander anschließen und dass zumindest drei über den Umfang dieser Lagerung verteilt angeordnete Hydraulikzylinder vorgesehen sind.

Die einzelnen Spannköpfe können auf Hydraulikzylindern an dem jeweiligen Spannglied festgelegt sein, so dass sie gegenüber dem Spannglied abstandsveränderlich sind und so unregelmäßigen Konturverläufen des Werkstückes besonders gut anpassbar sind.

Insbesondere kann vorgesehen sein, dass die Spannköpfe kardanisch oder kugelbeweglich gelagert sind, um dem Werkstück optimal angelegt werden zu können.

Vorteilhaft können die Spannköpfe als Sauger ausgestaltet werden, so dass sie ohne das Aufbringen von Klemmkräften oder die Gefahr mechanischer Oberflächenbeschädigungen das Werkstück zuverlässig festlegen können.

Vorteilhaft können die Kugel-Pfannen-Lagerungen zwischen zwei benachbarten Spanngliedern hydraulisch festgesetzt werden, so dass die hydraulischen Verstellzylinder lediglich für eine Ausrichtung der einzelnen Spannglieder zueinander die erforderlichen Kräfte aufbringen müssen, während zum Festsetzen der Spannkette die entsprechenden Kugel-Pfannen-Lagerungen der Spannkette hydraulisch festgesetzt werden, indem die Kugel in an sich bekannter Weise in ihrer Kugelpfanne hydraulisch fixiert wird.

Zwei Ausführungsbeispiele vorschlagsgemäßer Anordnungen zum Bearbeiten eingespannter Werkstücke werden nachfolgend anhand der rein schematischen Zeichnungen näher erläutert. Dabei zeigt
- Fig. 1: eine perspektivische Ansicht auf ein erstes Ausführungsbeispiel einer gesamten Vorrichtung, bestehend aus einer Spannvorrichtung samt Werkzeug und Messeinrichtung,
- Fig. 2: einen Querschnitt durch ein zweites Ausführungsbeispiel, wobei lediglich das Werkstück, das Werkzeug und die Messeinrichtung angedeutet sind, und
- Fig. 3: eine Draufsicht auf einen Anlageteller der Messeinrichtung von Fig. 2.

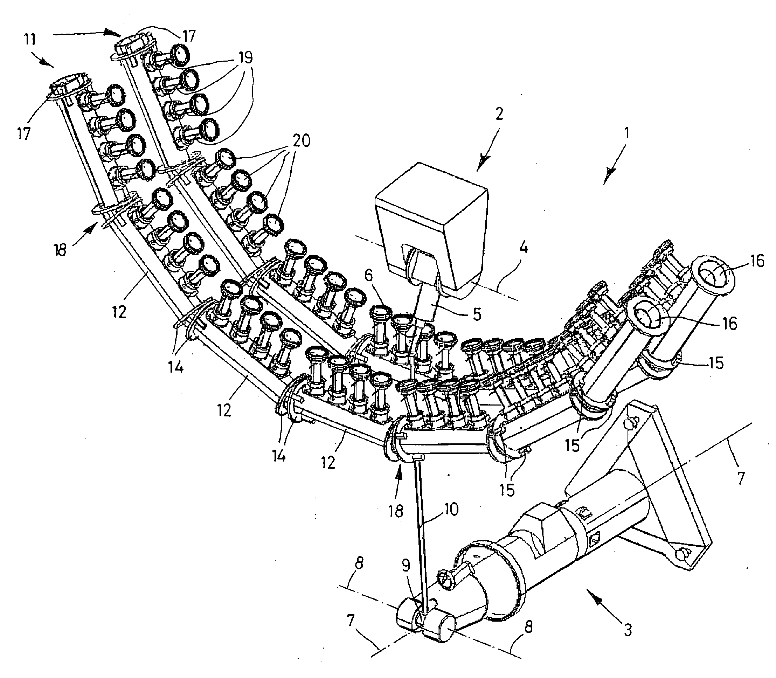

Fig. 1 zeigt in perspektivischer Darstellung eine Spannvorrichtung 1, ein Werkzeug 2 und eine Messeinrichtung 3. Um die Komponenten dieser Anordnung besser sichtbar zu machen, ist das zu bearbeitende Werkstück nicht dargestellt. Es könnte sich dabei um eine dünne Blechplatte von wenigen Millimeter Wandstärke handeln, die - wie aus dem U-förmigen Verlauf der Spannvorrichtung 1 hervorgeht - gebogen verlaufen würde.

Das Werkzeug 2 ist frei im Raum beweglich. Es weist eine Schwenkachse 4 auf, um welche ein Teleskopzylinder 5 verschwenkt werden kann, wobei am Ende des Teleskopzylinders 5 ein Fräskopf 6 vorgesehen ist, welcher zur spanabhebenden Bearbeitung des Werkstückes dient und beispielsweise bereichsweise die Materialstärke des zu bearbeitenden Bleches reduziert und so die gewünschte Sollkontur des Bleches schafft.

Die dem Werkzeug 2 auf der anderen Seite des Werkstückes gegenüberliegend angeordnete Messeinrichtung 3 kann insgesamt ebenfalls verfahren werden, und zwar zweidimensional auf einem in der Zeichnung nicht dargestellten Arbeits- bzw. Spanntisch. Die Messeinrichtung 3 weist zusätzlich eine erste horizontale Schwenkachse 7 sowie eine senkrecht zu dieser Schwenkachse 7 verlaufende zweite, ebenfalls horizontale Schwenkachse 8 auf. Ein Messkopf 9 ist auf diese Weise unterhalb des Werkstückes um die beiden Schwenkachsen 7 und 8 schwenkbar sowie mit der gesamten Messeinrichtung 3 verfahrbar, so dass er einen Laserstrahl 10 auf jeden Punkt an der Unter- oder Rückseite des Werkstückes richten kann. Dabei ist insbesondere vorteilhaft, dass die Spannvorrichtung nicht einen "Wald" in Form einer Vielzahl von Spannzylindern aufweist, welche die Beweglichkeit der Messeinrichtung 3 behindern würden, sondern dass die Spannvorrichtung 1 etwa horizontal hängende Spannketten 11 aufweist, unter welchen die Messeinrichtung 3 problemlos verfahren werden kann.

Aus der Zeichnung ist ersichtlich, dass der Laserstrahl 10 sich mit dem Fräskopf 6 trifft bei einem Werkstück, welches in der Zeichnung aus Übersichtlichkeitsgründen nicht dargestellt ist, aber welches sich zwischen dem Fräskopf 6 und dem Laserstrahl 10 befinden würde. Dies bedeutet, dass der Laserstrahl 10 - an der Rückseite - auf die selbe Stelle des Werkstückes gerichtet ist, welche - allerdings auf der Oberseite des Werkstückes - momentan von dem Werkzeug 2 bearbeitet wird.

Durch die Bearbeitung an dieser Stelle verursachte Formveränderungen des Werkstückes, also Positionsänderungen der Bearbeitungsstelle im Raum, können daher während der Bearbeitung durch die Messeinrichtung 3 registriert werden, so dass mittels einer in der Zeichnung ebenfalls aus Übersichtlichkeitsgründen nicht dargestellten Steuerung die Messwerte der Messeinrichtung 3 nahezu in Echtzeit verarbeitet werden können und dazu genutzt werden können, das Werkzeug 2 nachzuführen und beispielsweise die Position des Fräskopfes 6 im Raum dahingehend zu verändern, dass in Anpassung an die Bewegung des Werkstückes der Materialabtrag am Werkstück in der vorgesehenen Abtragungstiefe erfolgt und somit die gewünschte Wandstärke des Werkstückes an dieser Bearbeitungsstelle erzielt wird.

Die Spannketten 11 sind an ihren Enden jeweils an Konsolen gelagert, die aus Übersichtlichkeitsgründen ebenfalls nicht dargestellt sind, die jedoch - rein beispielhaft - als aufrechte Säulen oder Platten ausgestaltet sein können, welche auf dem Mess- bzw. Bearbeitungs- bzw. Spanntisch befestigt oder mit diesem verbunden sind. Jede Spannkette 11 besteht aus einer Mehrzahl von Spanngliedern 12, wobei jedes Spannglied 12 an seinen beiden Enden mit einem Kragen 14 versehen ist, und wobei jeweils zwei benachbarte Kragen 14 durch drei um jeweils 120° voneinander beabstandete Hydraulikzylinder 15 miteinander verbunden sind. Durch die individuelle Verstellbarkeit jedes dieser Hydraulikzylinder 15 können die einzelnen Spannglieder 12 in nahezu beliebigen Winkelstellungen zueinander ausgerichtet werden, so dass insgesamt jede Spannkette 11 optimal an die Geometrie des aufzunehmenden Werkstückes angepasst werden kann.

Die Lagerung zweier benachbarter Spannglieder 12 aneinander erfolgt dabei über eine Kugel-Pfanne-Lagerung, wobei in der Zeichnung die rechts angedeuteten Enden der Spannketten 11 jeweils eine Kugel 16 erkennen lassen, während die in der Zeichnung links dargestellten Enden der beiden Spannketten 11 die jeweils zugehörige Pfanne 17 einer derartigen Kugel-Pfanne-Lagerung aufweisen. Die gesamte Spannkette 11 ist jeweils aus standardisierten, gleichartigen einzelnen Spanngliedern 12 aufgebaut, so dass auf einfache Weise unter Verwendung dieser standardisierten, gleichen Spannglieder 12 unterschiedliche Spannketten 11 nicht nur unterschiedlichen Verlaufs, sondern beispielsweise auch unterschiedlicher Länge erstellt werden können.

Wenn sich die Spannkette 11 in ihrer vorgesehenen Konfiguration befindet, durch entsprechende Einstellung der Hydraulikzylinder 15 zwischen den jeweils aneinandergrenzenden Spanngliedern 12, so kann die Spannkette 11 in dieser Konfiguration fixiert werden. Hierzu ist vorgesehen, die Kugel-Pfannen-Lagerungen 18 auf an sich bekannte Weise hydraulisch festzusetzen.

Jedes Spannglied 12 weist eine Mehrzahl von Spannzylindern 19 auf, die beispielsweise als hydraulisch längenverstellbare Zylinder ausgestaltet sind und die jeweils an ihrem äußeren, freien Ende einen Spannkopf 20 in Form eines pneumatischen Saugers aufweisen. Die Spannköpfe 20 sind gegenüber den Spannzylindern 19 ebenfalls beweglich, vorzugsweise kardanisch oder kugelbeweglich, gelagert. Durch diese sowohl Längenbeweglichkeit der Spannzylinder 19 als auch Winkelbeweglichkeit der Spannköpfe 20 wird über die grundsätzliche Geometrieanpassung hinaus, die durch die Spannkette 11 an die Werkstückgeometrie möglich ist, eine Feinanpassung jedes einzelnen Spanners ermöglicht, der eine zuverlässige und optimale Festlegung des Werkstückes sicherstellt.

Jeder einzelne Spannkopf 20 wird durch eine entsprechende Steuerung daraufhin überwacht, ob eine Leckage auftritt und wie stark der anliegende Unterdruck ist. Dies kann durch eine pneumatische Überwachung erfolgen. Es kann jedoch auch vorgesehen sein, eine z. B. elektronisch arbeitende Kraft-Messeinrichtung an jedem Spannkopf 20 vorzusehen, so dass durch diese Kraft-Messeinrichtung überwacht werden kann, wie stark, d. h. mit welcher Kraft, das Werkstück an dem jeweiligen Spannkopf 20 anliegt. Die Spannvorrichtung 1 ermöglicht es daher, individuell für jeden einzelnen Spanner zu bestimmen, ob dieser korrekt funktioniert und ob das Werkstück durch diesen individuellen Spanner korrekt gehalten ist.

Aufgrund dieser zuverlässigen Überwachung jedes einzelnen Spanners ist es möglich, während der Bearbeitung einzelne Spanner vom Werkstück zu lösen und den jeweiligen Spannkopf 20 vom Werkstück zu entfernen, beispielsweise durch Einziehen des Spannzylinders 19. Auf diese Weise wird es bei entsprechender Positionierung der Messeinrichtung 3 möglich, den Laserstrahl 10 auf eine Stelle am Werkstück zu richten, welche zuvor durch einen Spanner festgelegt wurde. Die zuvor beschriebene Messung an der jeweils bearbeiteten Stelle des Werkstückes kann auf diese Weise erfolgen, und nachdem das Werkstück an dieser Stelle bearbeitet worden ist, kann der jeweilige Spanner erneut wieder an diese Stelle gefahren werden, so dass der zuvor gelöste Spannkopf 20 das Werkstück an dieser Stelle erneut festlegt.

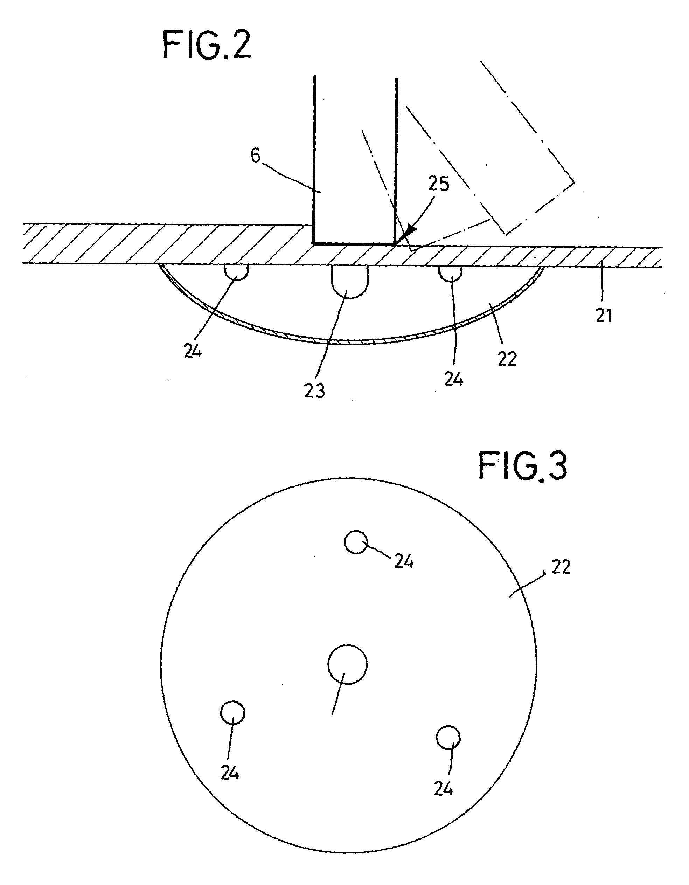

In Fig. 2 ist mit 21 ein Werkstück in Form eines flachen Blechzuschnittes bezeichnet, wobei es sich um ein gebogenes Aluminiumblech mit vergleichsweise großem Krümmungsradius handeln kann, wie es beispielsweise für den Rumpf eines Flugzeuges verwendet wird. Unterhalb des Werkstückes 21 ist ein Anlageteller 22 der Messeinrichtung 3 vorgesehen, welcher durch seine vergleichsweise geringe Dimensionierung von beispielsweise 80 bis 100 mm Durchmesser der Werkstückoberfläche trotz deren Krümmung im Wesentlichen vollflächig anliegt. In der Mitte des Anlagetellers 22 ist ein Ultraschall-Sensor 23 vorgesehen, der die Materialstärke des Werkstückes 21 ermittelt. Um den Ultraschall-Sensor 23 herum sind, wie insbesondere aus Fig. 3 ersichtlich ist, drei Wirbelstrom-Sensoren 24 angeordnet, welche dazu dienen, die Orientierung des Anlagetellers 22 - und damit des Werkstückes 21 im Bereich seiner Bearbeitungsstelle - zu erfassen.

Durch diese Erfassung der Orientierung bzw. Ausrichtung des Werkstückes 21 können unerwünschte Schrägstellungen des Werkzeugs - insbesondere seines Bearbeitungskopfes wie beispielsweise des Fräskopfes 6 - relativ zum Werkstück vermieden werden und stattdessen kann das Werkzeug in einer gewünschten Winkelstellung zum Werkstück 21 ausgerichtet werden.

Bei dem in Fig. 2 dargestellten Ausführungsbeispiel ist ein zylindrischer Fräskopf 6 als sogenannter Fingerfräser vorgesehen, der eine umlaufende Stirnkante 25 aufweist. In gestrichelten Linien ist dargestellt, wie bei einer Schrägstellung des Fräskopfes 6 zum Werkstück 21 diese Stirnkante 25 unerwünscht tief in das Werkstück 21 eindringt, wenn der Mittelpunkt der Stirnfläche des Fräskopfes 6 einen vorgegebenen, korrekten Abstand zum Anlageteller 22 einnimmt.

Da mit Hilfe der Wirbelstrom-Sensoren 24 bestimmt wird, wie das Werkstück 21 im Bereich der Bearbeitungsstelle im Raum ausgerichtet ist, kann der Fräskopf 6 in einer gewünschten Ausrichtung, beispielsweise senkrecht zum Werkstück 21, ausgerichtet werden, wie dies in durchgezogenen Linien in Fig. 2 dargestellt ist.

## Patentansprüche

1. Verfahren zum Bearbeiten eines in einer Spannvorrichtung (1) eingespannten Werkstücks (21),
wobei das Werkstück (21) eine "Soll-Position" einnimmt, und die Oberfläche des Werkstücks (21) durch ein relativ zum Werkstück (21) entlang einem Bahnverlauf bewegliches Werkzeug (2) zur Schaffung einer "Soll-Kontur" des Werkstücks (21) bearbeitet wird,
und das Werkstück (21) auf der dem Werkzeug (2) gegenüberliegenden Seite von einer Messeinrichtung (3) abgetastet wird,
und die Messeinrichtung (3) und das Werkzeug (2) gemeinsam geführt werden, derart, dass die Messeinrichtung (3) stets die dem Werkzeug (2) gegenüberliegende Stelle des Werkstücks (21) erfasst,
und während der Bearbeitung erfolgende Positionsveränderungen des Werkstücks (21) gegenüber dem Werkzeug (2) - wie durch Druck, Wärmeeinflüsse oder Spannungen verursachte Positionsveränderungen - von der Messeinrichtung (3) erfasst werden,
und wobei das Werkzeug (2) während der Bearbeitung in Abhängigkeit von den Messwerten der Messeinrichtung (3) und abweichend von einem als "Soll-Kurve" bezeichneten, vorgegebenen Bahnverlauf nachgeführt wird, derart, dass die vorgegebene Soll-Kontur des Werkstücks (21) möglichst präzise erstellt wird.

2. Verfahren nach Anspruch 1, **dadurch gekennzeichnet, dass** die Messeinrichtung (3) das Werkstück (21) berührungslos abtastet.

3. Verfahren nach Anspruch 1 oder 2, **dadurch gekennzeichnet,**
**dass** die Messeinrichtung (3) das Werkstück (21) mittels Lichtstrahlen abtastet - wie mittels eines Lasers.

4. Verfahren nach einem der vorhergehenden Ansprüche,
**dadurch gekennzeichnet,**
**dass** von einer Vielzahl von Spannköpfen (20), welche das Werkstück (21) halten, jeweils derjenige Spannkopf (20) vom Werkstück (21) gelöst wird, welcher dem Werkzeug (2) während der Bearbeitung am nächsten ist,
wobei dieser Spannkopf (20) das Werkstück (21) anschließend wieder erfasst und festlegt, wenn das Werkzeug (2) sich von dieser Einspannstelle wieder entfernt.

5. Verfahren nach einem der vorhergehenden Ansprüche,
**dadurch gekennzeichnet,**
**dass** ein dünnes, flächiges Werkstück (21) bearbeitet wird - wie ein metallisches Blech.

6. Verfahren nach Anspruch 1 oder 2, **dadurch gekennzeichnet,**
**dass** die Messeinrichtung (3) dem Werkstück (21) angelegt wird,
und die Materialstärke des Werkstücks (21) mittels der Messeinrichtung (3) materialdurchdringend ermittelt wird,
und das Werkzeug anhand der Messwerte nachgeführt wird.

7. Verfahren nach Anspruch 6, **dadurch gekennzeichnet, dass** die die Materialstärke des Werkstücks (21) mittels Ultraschall ermittelt wird.

8. Verfahren nach Anspruch 6 oder 7, **dadurch gekennzeichnet,**
**dass** die Bewegungen der Messeinrichtung (3) abgespeichert werden und anhand der ermittelten Materialstärken die genaue Größe bearbeiteter Werkstückflächen bestimmt wird.

9. Verfahren nach einem der vorhergehenden Ansprüche,
**dadurch gekennzeichnet,**
**dass** die Ausrichtung der Oberfläche des Werkstücks (21) ermittelt wird und das Werkzeug (2) in einem vorbestimmten Winkel zu dieser Oberfläche ausgerichtet wird.

10. Verfahren nach Anspruch 9, **dadurch gekennzeichnet,**
**dass** die die Ausrichtung der Oberfläche mittels Wirbelstrom-Sensoren ermittelt wird.

11. Verfahren nach einem der vorhergehenden Ansprüche,
**dadurch gekennzeichnet,**
**dass** die Größe der am Werkstück (21) bearbeiteten Bereiche mittels der Messeinrichtung (3) ermittelt wird.

12. Anordnung zum Bearbeiten eines Werkstückes,
mit einer Spannvorrichtung (1), welche das Werkstück (21) an mehreren Einspannstellen fixiert,
und mit einem Werkzeug (2), welches eine Oberfläche des Werkstücks (21) bearbeitend ausrichtbar ist,
und mit einer Messeinrichtung (3), welche die der zu bearbeitenden Oberfläche gegenüberliegende Oberfläche abtastend ausrichtbar ist,
wobei sowohl das Werkzeug (2) als auch die Messeinrichtung (3) relativ zum Werkstück (21) beweglich sind,
und mit einer Steuerung, welche die Messwerte der Messeinrichtung (3) auswertet und die Bewegungen sowohl der Messeinrichtung (3) als auch des Werkzeuges (2) steuert, derart, dass sie die Messeinrichtung (3) und das Werkzeug (2) stets einander auf unterschiedlichen Seiten des Werkstücks (21) gegenüberliegend positioniert, und dass sie das Werkzeug (2) entsprechend während der Bearbeitung ermittelter Messergebnisse zur Erzielung einer vorgegebenen Werkstück-Sollkontur nachführt.

13. Anordnung nach Anspruch 12, **dadurch gekennzeichnet,**
**dass** die Messeinrichtung (3) als berührungslose Messeinrichtung (3) ausgestaltet ist.

14. Anordnung nach Anspruch 13, **dadurch gekennzeichnet,**
**dass** die Messeinrichtung (3) als Laserabtasteinrichtung ausgestaltet ist.

15. Anordnung nach einem der Ansprüche 12 bis 14, **dadurch gekennzeichnet,**
**dass** die Spannvorrichtung (1) eine Vielzahl von Spannköpfen (20) aufweist, welche unabhängig voneinander am Werkstück (21) festlegbar oder vom Werkzeug lösbar sind.

16. Anordnung nach einem der Ansprüche 12 bis 15, **dadurch gekennzeichnet,**
**dass** die Spannvorrichtung (1) wenigstens eine Spannkette (11) aus mehreren einzelnen Spanngliedern (12) aufweist, wobei die Spannkette (11) an ihren beiden Enden an Konsolen gehalten ist,
und wobei die einzelnen Spannglieder (12) gegeneinander winkelbeweglich sind.

17. Anordnung nach Anspruch 16, **dadurch gekennzeichnet, dass** jedes Spannglied (12) mehrere Spannköpfe (20) aufweist.

18. Anordnung nach Anspruch 17, **dadurch gekennzeichnet, dass** wenigstens zwei Stellzylinder (15) zwischen jeweils zwei benachbarten Spanngliedern (12) vorgesehen sind,
wobei diese beiden Stellzylinder (15) unabhängig voneinander längenverstellbar sind, derart, dass durch unterschiedliche Längeneinstellung der Hydraulikzylinder (15) eine Winkelverstellung der beiden Spannglieder (12) zueinander erfolgt.

19. Anordnung nach Anspruch 17 oder 18, **dadurch gekennzeichnet, dass** zwei benachbarte Spannglieder (12) mittels einer Kugel-Pfannen-Lagerung (18) miteinander verbunden und gegeneinander winkelbeweglich sind,
wobei wenigstens drei um den Umfang der Kugel-Pfannen-Lagerung (18) verteilt angeordnete Hydraulikzylinder (15) vorgesehen sind.

20. Anordnung nach Anspruch 19, **dadurch gekennzeichnet, dass** die Kugel-Pfannen-Lagerung (18) hydraulisch festsetzbar ist, derart, dass die beiden benachbarten Spannglieder (12) in ihrer Winkelanordnung zueinander fixiert sind.

21. Anordnung nach einem der Ansprüche 12 bis 20, **dadurch gekennzeichnet, dass** die Spannvorrichtung (1) eine Vielzahl von Spannköpfen (20) aufweist, welche an längenverstellbaren Spannzylindern (19) befestigt sind.

22. Anordnung nach einem der Ansprüche 12 bis 21, **dadurch gekennzeichnet, dass** die Spannvorrichtung (1) eine Vielzahl von Spannköpfen (20) aufweist, welche in mehreren Richtungen beweglich gelagert sind, wie mittels einer kardanischen Lagerung oder einer kugelbeweglichen Lagerung.

23. Anordnung nach einem der Ansprüche 12 bis 22, **dadurch gekennzeichnet, dass** die Spannvorrichtung (1) eine Vielzahl von Spannköpfen (20) aufweist, die jeweils als pneumatische Sauger ausgestaltet sind.

24. Anordnung nach Anspruch 23, **gekennzeichnet durch** eine an dem Spannkopf (20) befestigte Einrichtung zur Ermittlung der Saugkraft bzw. des Anpreßdruckes des Werkstückes, mit welchem das Werkstück (21) an dem Spannkopf (20) anliegt.

25. Anordnung nach Anspruch 12, **dadurch gekennzeichnet,**
**dass** die Messeinrichtung (3) als dem Werkstück (21) anliegende Messeinrichtung (3) ausgestaltet ist.

26. Anordnung nach Anspruch 25, **dadurch gekennzeichnet,**
**dass** die Messeinrichtung (3) einen Sensor zur Bestimmung der Wandstärke des Werkstücks (21) aufweist - wie einen Ultraschallsensor.

27. Anordnung nach Anspruch 25, **dadurch gekennzeichnet,**
**dass** die Messeinrichtung (3) wenigstens einen Sensor zur Bestimmung der Ausrichtung des Werkstücks (21) aufweist - wie mehrere Wirbelstromsensoren.

28. Anordnung nach Anspruch 25, **dadurch gekennzeichnet,**
**dass** die Messeinrichtung (3) einen sensortragenden Anlageteller zur Anlage an der Werkstückoberfläche aufweist.

29. Anordnung nach Anspruch 28, **dadurch gekennzeichnet,**
**dass** der Anlageteller einen Durchmesser von etwa 100 mm aufweist.

30. Anordnung nach Anspruch 27 und 28, **dadurch gekennzeichnet,**
**dass** der Anlageteller wenigstens drei Sensoren aufweist, die jeweils etwa 30 bis 50 mm voneinander entfernt angeordnet sind.
